# DEMANDE DE BREVET EUROPEEN

(11) **EP 0 617 212 A1**
(43) Date de publication de la demande: **28.09.1994**
(21) Numéro de dépôt: 94400610.5
(22) Date de dépôt: 22.03.1994
(51) Int. Cl.: F16H 47/08, B60K 17/06, F16H 37/04

(54) **Dispositif de changement de vitesses automatique à plusieurs descentes d'engrenages**

(30) Priorité: 23.03.1993 FR 9303292; 27.04.1993 FR 9304933
(71) Demandeur: Société Anonyme dite: REGIE NATIONALE DES USINES RENAULT, F-92109 Boulogne Billancourt (FR)
(72) Inventeur: Valentin, Daniel, F-92500 Rueil Malmaison (FR)

(57) **Abrégé**

Dispositif de changement de vitesses automatique comportant à l'intérieur d'un carter (10, 110) un convertisseur hydrocinétique de couple (2, 102) dont l'arbre de sortie ou arbre primaire (3, 103) du dispositif entraîne un arbre secondaire (7, 8 ; 107), par l'intermédiaire de plusieurs pignons de descente (5, 6 ; 105, 105', 106) et d'un train épicycloïdal (11, 111) présentant un premier et un second planétaire coaxiaux P₁, P₂ (12, 112 ; 13, 113), un porte-satellites (14, 114), des satellites longs S₁ (15, 115) engrenant avec le premier planétaire P₁ (12, 112), des satellites courts S₂ (16, 116) eux-mêmes en prise avec le second planétaire P₂, (13, 113) et une couronne de sortie (17, 117), dispositif placé sous le contrôle de plusieurs embrayages (18, 19, 20 ; 118, 119, 120) et de plusieurs moyens d'immobilisation (23, 24 ; 123, 124), caractérisé en ce que le premier et le second planétaire P₁, P₂ (12, 13 ; 112, 113) peuvent être respectivement liés à l'arbre primaire (3, 103) par un premier et un second embrayage (18, 19 ; 118, 119) tandis que le porte-satellites PS (14, 114) peut être lié à l'arbre primaire (3, 103) par un troisième embrayage (20, 120).

## Description

La présente invention se rapporte au domaine technique des transmissions automatiques comportant un convertisseur de couple entraîné directement par le moteur du véhicule, et associé à un train épicycloïdal commandé par des freins et des embrayages. Plus précisément, elle concerne une boîte de vitesses automatique pour groupe moto-propulseur transversal.

Par la publication FR 2 677 422 de la demanderesse, on connaît un dispositif de changement de vitesses automatique de type transversal en bout, présentant à l'intérieur d'un carter un axe primaire aligné sur l'axe de sortie du moteur, et portant un convertisseur hydraulique qui entraîne, par l'intermédiaire d'engrenages cylindriques associés à plusieurs organes de commutation, un axe secondaire parallèle à l'arbre primaire.

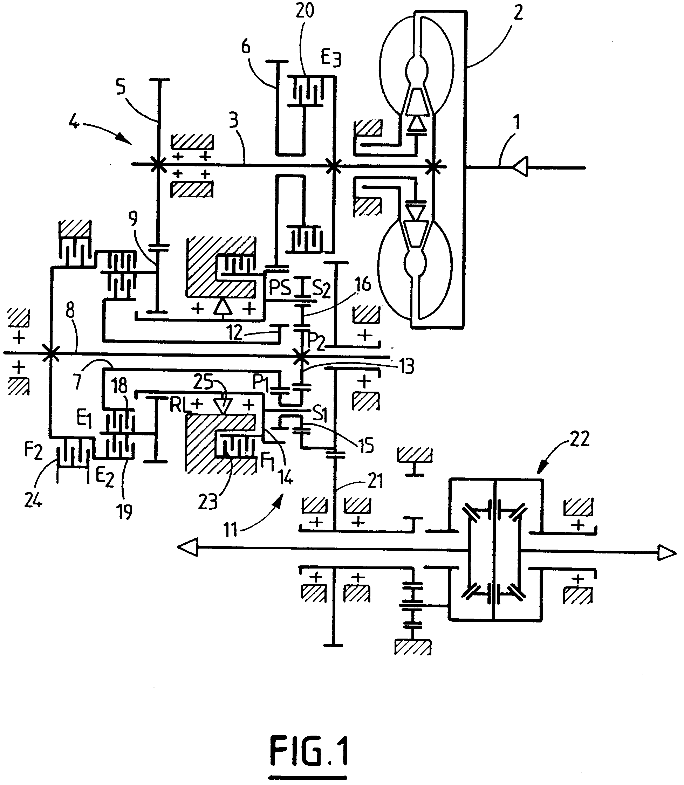

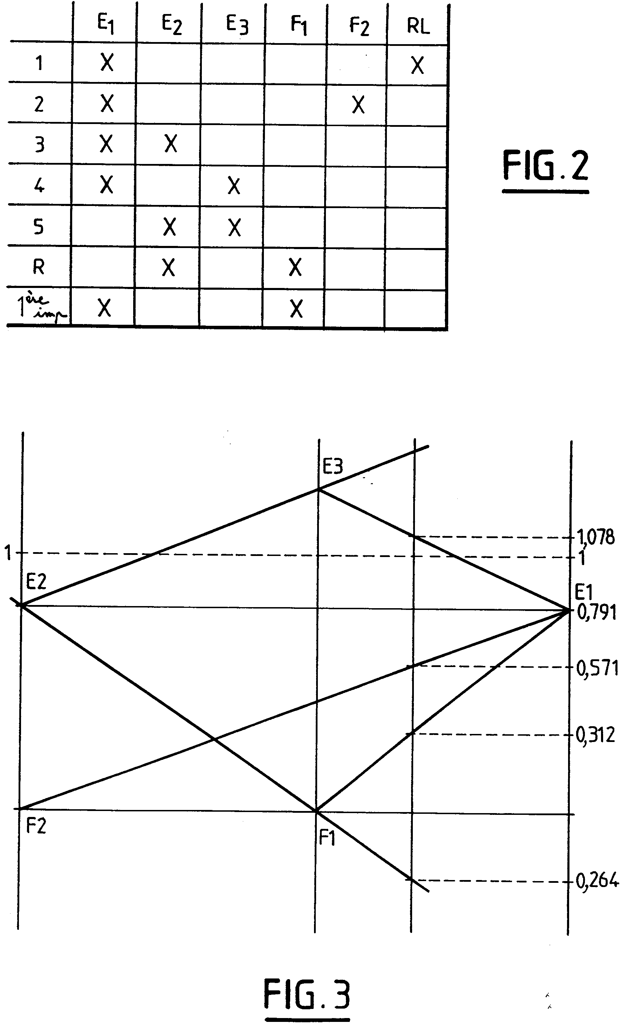

Les figures 1 et 2 de FR 2 677 422 mettent en évidence la présence de trois descentes d'engrenages distinctes, de l'axe primaire sur l'axe secondaire, ainsi que le montage de trois embrayages E₁, E₂, E₃ sur l'arbre primaire. Cependant, la disposition des organes de commutation n'est pas identique sur ces figures, puisque sur la figure 1 tous les organes de commutation sont disposés autour de l'arbre primaire, alors que sur la figure 2, un organe d'immobilisation, à savoir le frein F₂, est "descendu" sur la ligne secondaire.

Par ailleurs, la figure 3 de FR 2 677 422 propose une troisième architecture, ne présentant que deux descentes d'engrenages, tandis que les organes de commutation correspondants sont disposés pour une part sur l'arbre primaire, et pour une autre part sur l'arbre secondaire. Cette disposition permet d'obtenir cinq ou six rapports de marche avant.

Dans la pratique, certaines architectures de véhicule imposent, pour des raisons d'encombrement à l'intérieur du compartiment moteur, une réduction de la longueur de l'arbre primaire par rapport à celle de l'arbre secondaire. Selon la disposition illustrée par la figure 3 de la publication FR 2 677 422, la réduction souhaitée est limitée par la présence de la roue libre, d'un embrayage et d'un frein sur l'arbre primaire. Par ailleurs, il faut noter que le pignon de sortie de l'axe secondaire sur le différentiel est situé entre les deux descentes de mouvement de l'arbre primaire sur l'arbre secondaire.

L'adaptation de trois descentes d'engrenages sur l'arbre secondaire proposée dans cette publication, est très avantageuse, parce qu'elle procure une grande liberté dans le choix des rapports. Elle offre en effet six rapports de marche avant, ce qui permet de choisir parmi ceux-ci cinq rapports présentant l'étagement souhaité, en n'utilisant pas l'un des trois rapports supérieurs. Par ailleurs, la disposition des trois embrayages autour de l'arbre primaire dégage un espace important autour de l'arbre secondaire. On peut donc envisager de réduire la longueur de l'arbre secondaire, et de modifier en conséquence la forme du carter pour limiter l'encombrement total de la boîte de vitesses. Toutefois ce type d'adaptation conduit à réaliser des boîtes de vitesses de forme particulière, dont le carter présente un décrochement incompatible avec certains compartiments moteur.

La présente invention vise en premier lieu à réaliser un ensemble de transmission particulièrement compact et rigide.

Elle propose à cet effet un dispositif de changement de vitesses automatique comportant, à l'intérieur d'un carter, un convertisseur hydrocinétique de couple, dont l'arbre de sortie ou arbre primaire du dispositif entraîne un arbre secondaire, par l'intermédiaire de plusieurs pignons de descente et d'un train épicycloïdal présentant un premier et un second planétaire coaxiaux, un porte-satellite, des satellites longs engrenant avec le premier planétaire, des satellites courts, eux-mêmes en prise avec le second planétaire et une couronne de sortie, dispositif sous le contrôle de plusieurs engrenages et de plusieurs moyens d'immobilisations, caractérisé en ce que le premier et le second planétaire peuvent être respectivement liés à l'arbre primaire par un premier et par un second embrayage, tandis que le porte-satellites peut être lié à l'arbre primaire par un troisième embrayage.

La présente invention a ainsi pour but de réaliser un dispositif de changement de vitesses automatique transversal présentant au moins cinq rapports de marche avant, et adapté à la plupart des architectures de véhicules.

Dans cet objectif, elle propose un dispositif de changement de vitesses automatique, caractérisé en ce qu'il présente deux pignons de descente, et en ce que le premier et le second planétaire peuvent être respectivement liés au premier pignon de descente par un premier et un second embrayage, tandis que le porte-satellite peut être relié au second pignon de descente par un troisième embrayage.

Un autre aspect consiste à réaliser un dispositif de changement de vitesses automatique à trois descentes d'engrenages, particulièrement compact, et présentant toutefois deux arbres de même longueur.

L'invention concerne donc également un dispositif de changement de vitesses automatique caractérisé en ce que les deux planétaires peuvent respectivement être liés à un premier et un second pignon de descente par un premier et un second embrayage, tandis que le porte-satellite est en prise avec un troisième pignon de descente, pouvant être lié à l'arbre primaire par un troisième embrayage.

L'invention sera mieux comprise à la lecture de la description suivante d'un mode de réalisation particulier de celle-ci, en liaison avec les dessins annexés, sur lesquels :
- la figure 1 est un schéma d'architecture d'un premier dispositif de changement de vitesses conforme à l'invention,
- la figure 2 est un tableau de commutation applicable à cette architecture.
- la figure 3 illustre sous forme graphique l'étagement des rapports de la transmission,
- la figure 4 est une coupe simplifiée du dispositif illustré par la figure 1,
- la figure 5 est une coupe schématique d'un second dispositif de changement de vitesses conforme à l'invention, et
- la figure 6 illustre de façon graphique l'étagement des rapports de ce dernier.

Sur la figure 1, on a représenté l'extrémité de l'arbre moteur 1 entraînant de façon classique un convertisseur de couple hydrocinétique 2, dont l'arbre de sortie 3 constitue l'arbre primaire du mécanisme de changement de vitesses 4. L'arbre primaire 3 porte deux pignons de descente 5 et 6 sur l'arbre secondaire 7, 8 du mécanisme 4. Le premier pignon de descente 5 de l'arbre primaire 3 engrène avec le pignon 9 de l'arbre secondaire 7, 8, tandis que le second pignon 6 de l'arbre primaire 3 engrène avec le porte-satellite 14 du train épicycloïdal 11 porté par l'arbre secondaire 7, 8 et présentant deux planétaires P₁ et P₂ 12, 13, coaxiaux, un porte-satellite PS, 14, des satellites longs S₁ 15, et des satellites courts S₂, 16 ainsi qu'une couronne de sortie 17.

La première descente d'engrenages 5, 9 peut être reliée d'une part au premier planétaire P₁, 12 par un premier embrayage E₁, 18 et d'autre part au second planétaire P₂, 13 par un second embrayage E₂, 19 portés par l'arbre secondaire 7, 8 tandis que le second pignon de descente 6 peut être relié au porte-satellite 14 par un troisième embrayage E₃ 20, porté par l'arbre primaire 3. Les satellites courts S₂, 16, sont en prise avec le second planétaire P₂, 13 avec la couronne de sortie 17 et avec les satellites longs S₁ 15, engrenant pour leur part avec le premier planétaire P₁, 12. La couronne de sortie 17 du train 11 est reliée au pignon de sortie du mouvement 21 sur le différentiel 22.

Outre les trois embrayages (E₁, E₂, E₃) 18, 19, 20, le système de commutation du dispositif de changement de vitesses 4 comporte deux freins F₁, F₂, 23, 24, portés par l'arbre secondaire 7, 8 et permettant respectivement d'immobiliser le porte-satellite 14, et le pignon 9 de l'arbre secondaire 7, 8, ainsi qu'une roue libre RL, 25 à l'intérieur de laquelle est montée le porte-satellite 14.

En se reportant à la figure 2, on voit que la première descente d'engrenages 5, 9 est empruntée sur tous les rapports, puisque l'un au moins des deux premiers embrayages E₁, ou E₂ est toujours serré. Le premier rapport de marche avant est obtenu en serrant le premier embrayage E₁, 18, le porte satellite PS, 14 étant alors immobilisé par la roue libre RL 25, et le mouvement entrant dans le train 11 par le premier planétaire P₁, 12. Sur le second rapport de marche avant, l'entrée du mouvement dans le train 11 s'effectue par le premier planétaire P₁, 12 (F₁ serré), tandis que le second planétaire P₂, est immobilisé par le second frein F_{2,} 24. Le troisième rapport de marche avant (E₁ et E₂ serrés) correspond à une rotation "en bloc" du train 11 puisque les deux planétaires P₁ et P₂ sont solidaires de la première descente 5, 9. Sur le quatrième rapport de marche avant, le premier et le troisième embrayage E₁, E_{3,} sont serrés, si bien que le mouvement entre dans le train 11 par le premier planétaire P₁, 12 et le porte-satellite PS 14 qui sont donc solidaires en rotation, alors que sur le cinquième rapport de marche avant (E₂ et E₃ serrés), le second planétaire P₂ , 13 est immobilisé par rapport au porte-satellite PS, 14. Enfin, la marche arrière est assurée par l'immobilisation du porte-satellite PS, par rapport au carter et l'entraînement du second planétaire P₂, 13 (E₂ et E₁ serrés), tandis que la première imposée est obtenue par l'immobilisation du porte-satellite PS vis-à-vis du carter 10 et l'entraînement du premier planétaire P₁, (E₁, F₁ serrés).

L'étagement des rapports illustrés par le graphique de RAVIGNEAUX de la figure 3 est particulièrement satisfaisant.
- MAR:: - 0,264
- 1ère :: 0,312
- 2ème :: 0,571
- 3ème :: 0,791
- 4ème :: 1,078
- 5ème :: 1,422

Ce graphique correspond à l'adoption d'un rapport de dents inverse par exemple 53/67 et 67/53 entre les pignons de chaque descente d'engrenages (5,9 et 6, 14). Bien entendu, ces valeurs numériques sont indiquées à titre d'exemple non limitatif.

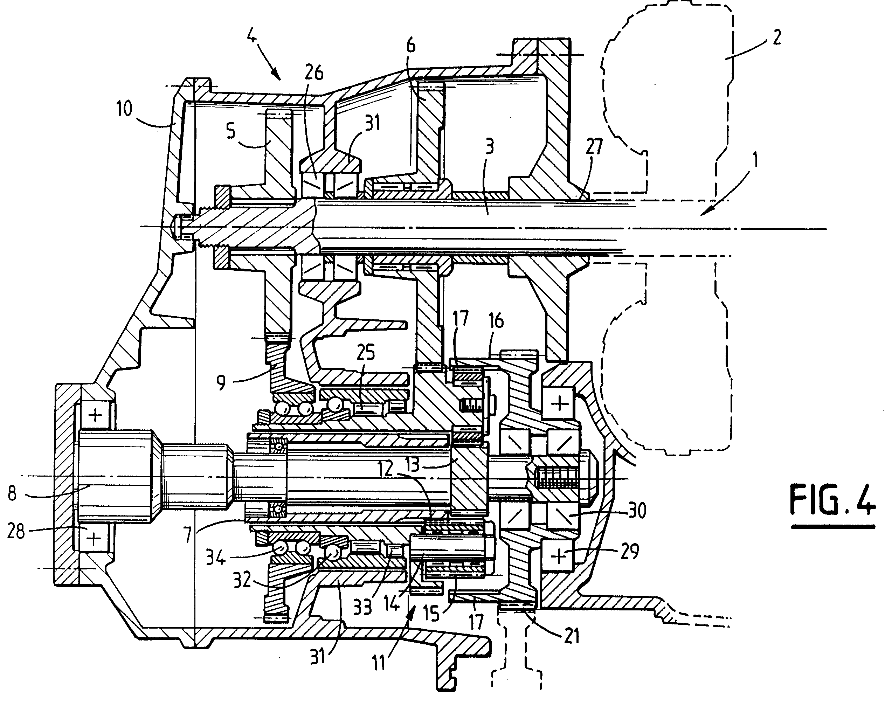

Sur la figure 4, on reconnaît l'ensemble des éléments d'entraînement de la figure 1, mais les organes de commutation n'ont pas été représentés pour ne pas surcharger le schéma. Cette figure met en évidence la réalisation d'un certain nombre de dispositions, telles que le montage du porte-satellite 14 autour de l'arbre secondaire, 7, 8, la liaison, et la liaison "flottante" entre la couronne de sortie 17 du train 11 et le pignon de descente 21 sur le différentiel 22 .

Outre les éléments mentionnés plus haut, la figure 4 fait apparaître les moyens de support et de roulement des arbres 3 primaire et secondaire 7, 8 et des principaux éléments d'entraînement, vis-à-vis du carter 10. L'arbre primaire 3 est supporté, d'une part par un double roulement conique 26 disposé entre les deux pignons de descente 5, 6, et d'autre part par une bague d'extrémité 27 à proximité du convertisseur 2. L'arbre secondaire 7, 8 est supporté à ses extrémités par deux roulements d'extrémité 28, 29. Le roulement de gauche 28 est directement un appui contre l'arbre secondaire 8, tandis que le roulement de droite 29 supporte l'arbre secondaire 8, par l'intermédiaire du pignon de descente 21 sur le différentiel 22 et d'un double roulement conique 30 disposé en dessous de celui-ci, c'est-à-dire entre l'arbre secondaire 8 et le pignon 21.

Par ailleurs, la rigidité du dispositif est renforcée de façon très efficace par une superposition de renforcements 31 du carter 10 sur lesquels sont en appui le double roulement conique 26 de l'arbre primaire 3 et le double roulement 32, 33 qui assure l'appui du porte-satellite 14 sur le carter 10. La figure 4 fait également apparaître le double roulement à billes 34 autorisant la rotation du pignon 9 de l'arbre secondaire 7, 8 autour du porte-satellite 14. Enfin, on remarquera que le pignon de descente 21 sur le différentiel 22 est situé à l'extérieur des pignons de descente 5, 6, à l'extrémité droite de l'arbre secondaire 8 et que la roue libre 25 est disposée entre les deux éléments 32, 33 du double roulement supportant le porte-satellite 14 vis-à-vis du carter 10.

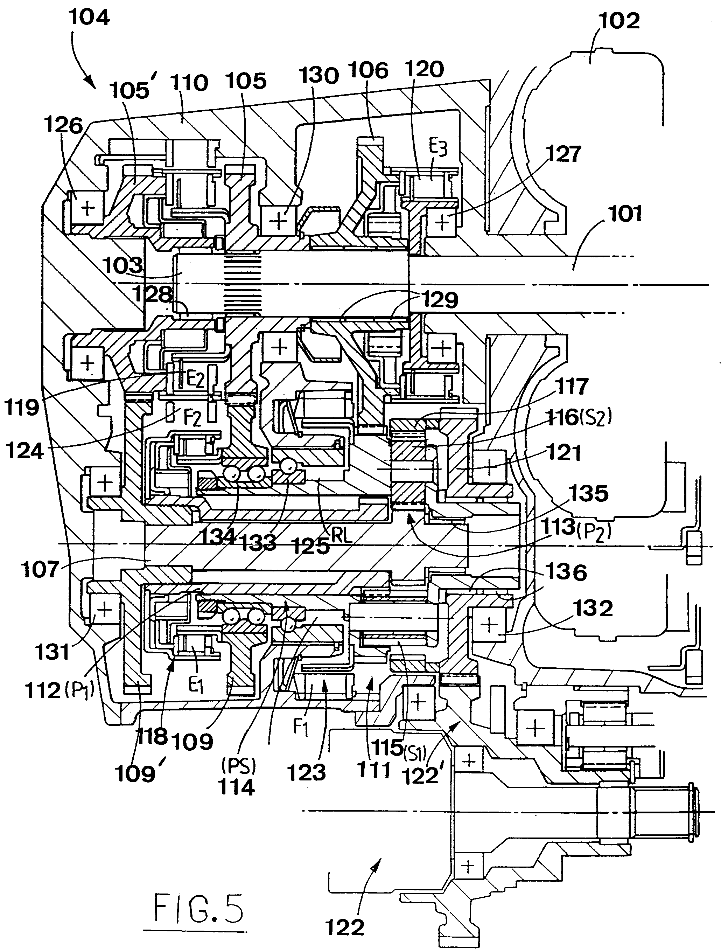

Sur la figure 5, on a représenté l'extrémité d'un arbre de moteur 101, entraînant de façon classique un convertisseur de couple hydrocinétique 102, dont l'arbre de sortie 103 constitue l'arbre primaire du mécanisme de changement de vitesses 104. L'arbre primaire 103 porte trois pignons de descente 105, 105', et 106 sur l'arbre secondaire 107 du mécanisme 104. Le premier pignon de descente 105, fixé sur l'arbre primaire 101, engrène avec un premier pignon secondaire 109, monté par l'intermédiaire d'un double roulement à billes 134, autour du porte-satellites 114 du train 111. Le second pignon de descente 105', reposant par l'intermédiaire d'un roulement à aiguilles 128, autour de l'arbre primaire 103, est en prise avec un second pignon secondaire 109', qui attaque le second planétaire P₂, 113 du train 111. Enfin, le troisième pignon de descente 106, monté sur des bagues 129, autour de l'arbre primaire 103, est en prise avec le porte-satellites 114. Le train épicycloïdal 111 comporte des satellites longs S₁ 115, en prise avec le premier planétaire P₁ 112 et des satellites courts S₂ 116, engrenant pour leur part avec le second planétaire P₂ 113, appartenant à l'arbre secondaire 107, et avec la couronne de sortie 117. Cette dernière est reliée, par une liaison flottante au pignon de sortie 121, attaquant la couronne 122', du différentiel 122, dont on n'a pas représenté le mécanisme intérieur.

Le dispositif illustré par la figure 5 comporte cinq organes de commutation, E₁, E₂, E₃, F₁ et F₂, répartis entre ses lignes primaire et secondaire. Le premier embrayage E₁, 118, porté cette fois par l'arbre secondaire 107, permet d'assurer l'entrée du mouvement dans le train 111, par la première descente d'engrenages 105, 109 et le premier planétaire P₁, 112, en solidarisant ce dernier avec le premier pignon secondaire 109. Le serrage du second embrayage E₂, 119, placé sur la ligne primaire, permet d'entraîner le second pignon de descente 105', et d'assurer ainsi l'entrée du mouvement dans le train 111, par le second planétaire P₂, 113. Le troisième embrayage E₃ 120, également porté par la ligne primaire permet de solidariser le troisième pignon de descente 106 avec l'arbre primaire 103, de façon à assurer l'entrée du mouvement dans le train 111 par le porte-satellites 114. Le premier frein F₁ 123, disposé sur la ligne secondaire, permet d'immobiliser le porte-satellites PS, 114, vis-à-vis du carter 110, et le second frein F₂, 124, monté sur la ligne primaire, permet d'immobiliser le second pignon de descente 105', vis-à-vis du carter 110. Enfin la roue libre RL, 125, montée autour de l'arbre secondaire 107, n'autorise la rotation du porte-satellites PS 114, que dans un seul sens autour de celui-ci.

En se reportant à la figure 2, applicable au dispositif illustré par la figure 5 on voit que l'embrayage E₁ est serré sur les quatre premiers rapports de marche avant et sur la première imposée, donc que la première descente d'engrenages 105, 109 est empruntée sur chacun de ces cinq rapports. Le premier rapport de marche avant est obtenu en ne serrant que le premier embrayage E₁. Le porte-satellites PS est alors immobilisé par la roue libre RL, et le mouvement entre dans le train 111 par le premier planétaire P₁. Sur le second rapport de marche avant, l'entrée du mouvement dans le train, s'effectue par le premier planétaire (E₁ serré), tandis que le second planétaire P₂ est immobilisé par le second frein F₂. Le troisième rapport de marche avant (E₁ et E₂ serrés) correspond à une rotation en bloc du train 111, puisque les deux planétaires P₁ et P₂ sont entraînés simultanément. Sur le quatrième rapport de marche avant, le premier et le troisième embrayage E₁ et E₃ sont serrés, si bien que le mouvement entre dans le train par le premier planétaire P₁ et le porte-satellites PS. Enfin la marche arrière est assurée par l'immobilisation du porte-satellites PS par rapport au carter 10, et l'entraînement du second planétaire P₂ (E₂ et F₁ serrés), et la première imposée en immobilisant le porte-satellites PS et en empruntant le premier planétaire (E₁ et F₁ serrés).

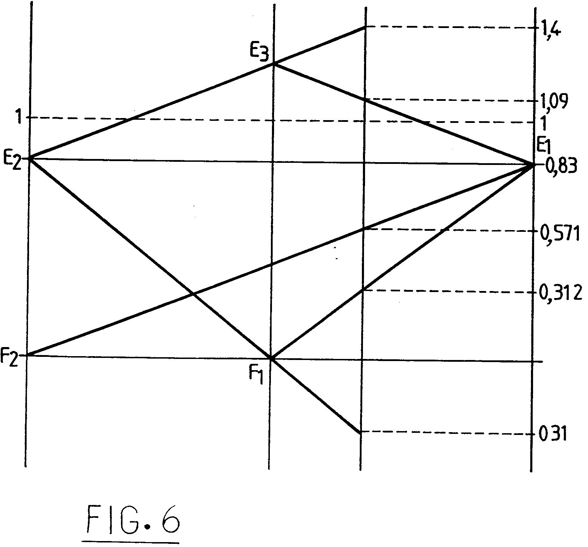

L'étagement des rapports illustré à titre d'exemple non limitatif par le graphique de RAVIGNEAUX de la figure 6 est particulièrement satisfaisant :
- MAR: : 0,31
- 1ère: : 0,312
- 2ème: : 0,571
- 3ème: : 0,83
- 4ème: : 1,04
- 5ème: : 1,4

Ce graphique correspond à l'adoption d'un rapport de nombre de dents de 53/67 = 0,721 sur l'embrayage E₁ et la première descente d'engrenages 5,9, de 58/63 =0,921 sur le second embrayage E₂ et la seconde descente d'engrenages, et de 63/58 = 1,283 sur le troisième embrayage et la troisième descente d'engrenages. Comme indiqué plus haut, ces valeurs sont purement indicatives, et on peut envisager l'utilisation de rapports de nombre de dents différents sur chaque descente d'engrenages, sans sortir du cadre de l'invention.

Outre la disposition des organes de transfert du couple, et des organes de commutation, la figure 1 fait apparaître celle des organes de roulement nécessaires au fonctionnement du dispositif. La rotation et le maintien de l'arbre primaire 3 est assuré par un premier et un second roulements (126, 127), disposés respectivement autour du second pignon de descente 105' et sous le troisième embrayage E₃ 120. Le premier pignon de descente 105 est fixé sur l'arbre primaire 103, tandis que le second pignon de descente 105' tourne librement sur celui-ci grâce à un premier roulement à aiguilles 128 et que le troisième pignon de descente 106 est monté sur deux bagues 129 autorisant sa libre rotation autour de l'arbre primaire 103. Enfin, la ligne primaire présente un troisième roulement 130, disposé entre le premier pignon de descente 105 et le carter 110.

Le maintien et la rotation de la ligne secondaire, vis-à-vis du carter 110, sont assurés à l'aide d'un quatrième et d'un cinquième roulements 131, 132 disposés respectivement autour du second pignon secondaire 109' et du pignon de descente 121 sur le différentiel 122, et à l'aide d'un roulement 133 de porte-satellites, disposé entre le porte-satellites PS 114 et le carter 110. Par ailleurs, un double roulement à billes 134 maintient le premier pignon secondaire 109 autour du porte-satellites PS 114. L'arbre secondaire 107 est engagé par une de ses extrémités sous le pignon de descente 121 attaquant la couronne 122' du différentiel 122. Plus précisément, cette extrémité repose à l'intérieur du porte-satellites PS 114 par l'intermédiaire d'un second roulement à aiguilles 135, tandis que celui-ci repose lui-même par l'intermédiaire d'un troisième roulement à aiguilles 136 par exemple un double roulement à aiguilles à l'intérieur du pignon de descente 121 sur le différentiel 127.

En conclusion, les dispositifs de changement de vitesses décrits ci-dessus à titre d'exemples de réalisation non limitatifs de la présente invention comportent de nombreux avantages, parmi lesquels on peut citer:
- leur structure très compacte,
- la réduction importante de la longueur de l'arbre primaire par rapport à l'arbre secondaire, autorisée par le transfert de la roue libre de deux embrayages sur trois, et des deux freins sur l'axe secondaire.
- le déport du pignon de descente sur le différentiel à l'extrémité de l'arbre secondaire.

Enfin, il faut souligner que l'invention permet de réaliser une boîte de vitesses automatique à triple descente d'engrenages particulièrement compacte, et présentant deux arbres de même longueur, grâce à une disposition judicieuse des différents organes de commutation, à l'intérieur du carter. Par ailleurs, le maintien de l'arbre primaire dans sa partie centrale au moyen d'un roulement placé entre l'un des pignons de descente sur le secondaire, et le carter, le maintien d'un pignon secondaire autour du porte-satellites par l'intermédiaire d'un double roulement à billes, l'engagement d'une extrémité du porte-satellites à l'intérieur du pignon de descente sur le différentiel, et le maintien de celui-ci vis-à-vis du carter par un roulement d'extrémité, garantissent une bonne répartition des efforts entre les différents éléments de la chaîne cinématique et le carter.

## Revendications

**[1]** Dispositif de changement de vitesses automatique comportant à l'intérieur d'un carter (10, 110) un convertisseur hydrocinétique de couple (2, 102) dont l'arbre de sortie ou arbre primaire (3, 103) du dispositif entraîne un arbre secondaire (7, 8 ; 107), par l'intermédiaire de plusieurs pignons de descente (5, 6 ; 105, 105', 106) et d'un train épicycloïdal (11, 111) présentant un premier et un second planétaire coaxiaux P₁, P₂ (12, 112 ; 13, 113), un porte-satellites (14, 114), des satellites longs S₁ (15, 115) engrenant avec le premier planétaire P₁ (12, 112), des satellites courts S₂ (16, 116) eux-mêmes en prise avec le second planétaire P₂, (13, 113) et une couronne de sortie (17, 117), dispositif placé sous le contrôle de plusieurs embrayages (18, 19, 20 ; 118, 119, 120) et de plusieurs moyens d'immobilisation (23, 24 ; 123, 124), caractérisé en ce que le premier et le second planétaire P₁, P₂ (12, 13 ; 112, 113) peuvent être respectivement liés à l'arbre primaire (3, 103) par un premier et un second embrayage (18, 19 ; 118, 119) tandis que le porte-satellites PS (14, 114) peut être lié à l'arbre primaire (3, 103) par un troisième embrayage (20, 120).

**[2]** Dispositif de changement de vitesses automatique selon la revendication 1, caractérisé en ce qu'il présente un premier moyen d'immobilisation F₁ (23, 123) permettant d'immobiliser le porte-satellite PS (14, 114) par rapport au carter (10, 110) et un second moyen d'immobilisation F₂ (24, 124) permettant d'immobiliser le second planétaire P₂ (13, 113) par rapport au carter (10, 110).

**[3]** Dispositif de changement de vitesses automatique selon les revendications 1 ou 2, caractérisé en ce qu'il présente deux pignons de descente (5,6), et en ce que le premier et le second planétaire P₁, P₂ (12, 13) peuvent être respectivement liés au premier pignon de descente (5) par un premier et un second embrayage (18, 19) tandis que le porte-satellites PS (14) peut être relié en second pignon de descente (6) par un troisième embrayage (20).

**[4]** Dispositif de changement de vitesses automatique selon les revendications 1, 2 ou 3, caractérisé en ce que l'arbre primaire (3) est supporté par un double roulement conique (26) disposé entre le premier et le second pignon de descente (5 et 6).

**[5]** Dispositif de changement de vitesses automatique selon l'une quelconque des revendications précédentes, caractérisé en ce que l'arbre secondaire (7, 8) est supporté par deux roulements d'extrémité (28, 29), dont l'un est monté autour du pignon de descente (21) sur le différentiel (22) de la transmission.

**[6]** Dispositif de changement de vitesses automatique selon la revendication 5, caractérisé en ce que le pignon de descente (21) sur le différentiel (22) repose sur l'arbre secondaire (8), par l'intermédiaire d'un double roulement conique (30).

**[7]** Dispositif de changement de vitesses automatique selon l'une quelconque des revendications précédentes, caractérisé en ce que le pignon (9) de l'arbre secondaire (7, 8) engrenant avec le premier pignon (5) de l'arbre primaire (3), est monté autour du porte-satellite (14) par l'intermédiaire d'un double roulement, (34) disposé entre ces deux éléments.

**[8]** Dispositif de changement de vitesses automatique selon l'une quelconque des revendications précédentes, caractérisé en ce que le porte-satellite (14) est en appui contre le carter (10) par l'intermédiaire d'un double roulement d'appui (32, 33).

**[9]** Dispositif de changement de vitesses automatique selon l'une quelconque des revendications 4 à 8, caractérisé en ce que le double roulement conique (26) de l'arbre primaire (3) est sensiblement à l'aplomb du double roulement d'appui (32, 33) du porte-satellite (14) sur le carter (10).

**[10]** Dispositif de changement de vitesses automatique selon l'une quelconque des revendications précédentes, caractérisé en ce qu'il comporte une roue libre (25) disposée entre les deux éléments (33, 34) du roulement d'appui du porte-satellite. (14).

**[11]** Dispositif de changement de vitesses selon les revendications 1 ou 2, caractérisé en ce que les deux planétaires P₁, P₂ (112, 113) peuvent respectivement être liés à un premier et un second pignon de descente (105, 105'), par un premier et un second embrayage E₁, E₂ (118, 119) tandis que le porte-satellites PS (114) est en prise avec un troisième pignon de descente (106) pouvant être lié à l'arbre primaire (103) par un troisième embrayage E₃ (120).

**[12]** Dispositif de changement de vitesses selon la revendication 11, caractérisé en ce que l'arbre secondaire (107) porte le premier embrayage E₁ (118), le premier moyen d'immobilisation F₁ (123) ainsi qu'une roue libre RL (125), tandis que l'arbre primaire (103) porte le second et le troisième embrayage E_{2,} E₃ (119, 120) ainsi que le second moyen d'immobilisation F₂ (124).

**[13]** Dispositif de changement de vitesses selon les revendications 11 ou 12, caractérisé en ce que l'arbre primaire (103) est supporté par trois roulements (126, 127, 130) disposés respectivement à chacune de ses extrémités et autour du premier pignon de descente (105).

**[14]** Dispositif de changement de vitesses selon l'une des revendications 11, 12 ou 13, caractérisé en ce que l'arbre secondaire (107) est supporté par deux roulements d'extrémités (137, 132), dont l'un est monté autour du pignon de descente (121) sur le différentiel (122) de la transmission.

**[15]** Dispositif de changement de vitesses selon la revendication 14, caractérisé en ce qu'une extrémité de l'arbre secondaire (107) repose à l'intérieur du porte-satellites PS (114) par l'intermédiaire d'un roulement à aiguilles (135), tandis que celui-ci repose lui-même à l'intérieur du pignon de sortie (121) sur le différentiel (122) par l'intermédiaire d'un roulement à aiguilles (136).

**[16]** Dispositif de changement de vitesses selon l'une quelconque des revendications 11 à 15, caractérisé en ce que le premier pignon de descente (105) est fixé sur l'arbre primaire (103) et en ce que le premier pignon secondaire (109) est monté autour du porte-satellites PS (111) par l'intermédiaire d'un roulement (134).

**[17]** Dispositif de changement de vitesses selon l'une des revendications 11 à 16, caractérisé en ce que le porte-satellites PS (111) maintenu vis-à-vis du carter (110) par un roulement de porte-satellites PS (133) disposé entre le porte-satellites (114) et le carter (110).

**[18]** Dispositif de changement de vitesses selon l'une des revendications 11 à 17, caractérisé en ce que l'arbre primaire (103) et l'arbre secondaire (107) ont sensiblement la même longueur.
